(19) Europäisches Patentamt
European Patent Office
Office européen des brevets

(11) **EP 3 112 854 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(51) Int Cl.:
***G01N 25/16*** (2006.01)

(21) Anmeldenummer: **16001440.3**

(22) Anmeldetag: **28.06.2016**

(54) **VERFAHREN UND VORRICHTUNG ZUR THERMOMECHANISCHEN ANALYSE EINER PROBE**

METHOD AND DEVICE FOR THE THERMOMECHANICAL ANALYSIS OF A SAMPLE

PROCEDE ET DISPOSITIF D'ANALYSE THERMOMECANIQUE D'UN ECHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2015 DE 102015008654**

(43) Veröffentlichungstag der Anmeldung:
**04.01.2017 Patentblatt 2017/01**

(73) Patentinhaber: **Netzsch Gerätebau GmbH 95100 Selb (DE)**

(72) Erfinder:
 • **Moukhina, Elena 95100 Selb (DE)**
 • **Rapp, Doreen 95173 Schönwald (DE)**
 • **Meyer, Markus 86678 Ehingen (DE)**
 • **Hilpert, Thilo 95100 Selb (DE)**
 • **Hager, Martin 95163 Weißenstadt (DE)**
 • **Wohlfahrt, Fabian 95111 Rehau (DE)**

(56) Entgegenhaltungen:
**US-A- 6 007 240**

 • **PRICE D M ET AL: "Modulated-Temperature Thermomechanical Analysis of Fibres", JOURNAL OF THERMAL ANALYSIS AND CALORIMETRY, KLUWER ACADEMIC PUBLISHERS, DORDRECHT, NL, Bd. 56, Nr. 2, 1. Mai 1999 (1999-05-01), Seiten 649-654, XP019252873, ISSN: 1572-8943**

EP 3 112 854 B1

**Beschreibung**

Die vorliegende Erfindung betrifft ein Verfahren zur thermomechanischen Analyse einer Probe nach dem Oberbegriff des Anspruchs 1 sowie eine Vorrichtung zur thermomechanischen Analyse nach dem Oberbegriff des Anspruchs 12.

Bei einer thermomechanischen Analyse, oftmals auch als TMA ("thermomechanical analysis") bezeichnet, werden eine oder mehrere mechanische Eigenschaften einer Probe eines Materials in Abhängigkeit von der Temperatur gemessen. Bei dem Material kann es sich z. B. um Feststoff, Flüssigkeit oder pastöses Material handeln. Oftmals wird hierbei z. B. eine Längenänderung als Funktion der Temperatur und/oder Zeit unter wohldefinierter mechanischer Belastung der Probe gemessen, wobei die Probe üblicherweise einer vorbestimmt-zeitabhängigen Temperatur, also einem "Temperaturprogramm" ausgesetzt wird.

Insbesondere im Fall einer praktisch vernachlässigbaren (relativ kleinen), z. B. nur durch die Verwendung eines Fühlstempels oder dergleichen zur Messung der Längenänderung bedingten mechanischen Belastung der Probe wird die TMA oftmals als Dilatometrie bezeichnet, bzw. bei Einsatz eines modulierten Temperaturprogrammes als temperaturmodulierte Dilatometrie.

Bei einer TMA der hier interessierenden Art wird ein "moduliertes Temperaturprogramm" verwendet, was bedeutet, dass der zeitliche Verlauf der Temperatur sich zusammensetzt aus einer zugrundeliegenden, zumeist linear vorgegebenen Temperaturänderung entsprechend einer "Basisheizrate", und aus einer diese Temperaturänderung überlagernden, zumeist sinusförmig (alternativ denkbar z. B. dreieck-, rechteck- oder sägezahnförmig) vorgegebenen Temperaturmodulation.

Ein wichtiges Ziel einer TMA der hier interessierenden Art ist es, für das Material der Probe zumindest eine "reversible Komponente" der (temperaturänderungsbedingten) Längenänderung und/oder insbesondere z. B. eine reversible Komponente des thermischen Ausdehnungskoeffizienten zu ermitteln.

Da sich, falls die Probe bei der thermomechanischen Analyse einem thermisch bedingten Umwandlungsprozess (z. B. Phasenübergang, Glasübergang, Sinterprozess etc.) unterliegt, eine unmittelbar gemessene "totale Komponente" der Längenänderung bzw. des thermischen Ausdehnungskoeffizienten additiv zusammensetzt aus einer "reversiblen Komponente" und einer "nichtreversiblen Komponente", lässt sich nach Bestimmung der "reversiblen Komponente" auch einfach die "nichtreversible Komponente" der Längenänderung bzw. des thermischen Ausdehnungskoeffizienten ermitteln (durch Subtraktion der reversiblen Komponente von der totalen Komponente).

Die temperaturabhängige Bestimmung und Charakterisierung von Schrumpfungs- oder Ausdehnungseffekten der Probe bzw. des Einflusses derartiger Effekte auf die Längenänderung bzw. den thermischen Ausdehnungskoeffizienten ist in der Praxis oftmals ein "Hauptziel" der TMA.

Ein gattungsgemäßes Verfahren zur thermomechanischen Analyse ist beispielsweise in der US 6,007,240 beschrieben und umfasst folgende Schritte:

a) Anordnen der Probe in einer thermomechanischen Analyseeinrichtung und Temperieren der Probe mittels der Analyseeinrichtung gemäß eines modulierten Temperaturprogrammes,

b) Aufzeichnen von mittels der Analyseeinrichtung gewonnener Daten, die repräsentativ für eine Längenänderung der Probe im Verlauf der Temperierung sind,

c) Auswerten der Daten, um eine reversible Komponente der Längenänderung und/oder eine reversible Komponente des thermischen Ausdehnungskoeffizienten der Probe zu ermitteln,

d) Berechnen einer korrigierten reversiblen Komponente der Längenänderung mittels eines Korrekturparameters, der als das Verhältnis einer totalen Längenänderung und einer reversiblen Komponente der Längenänderung berechnet wird.

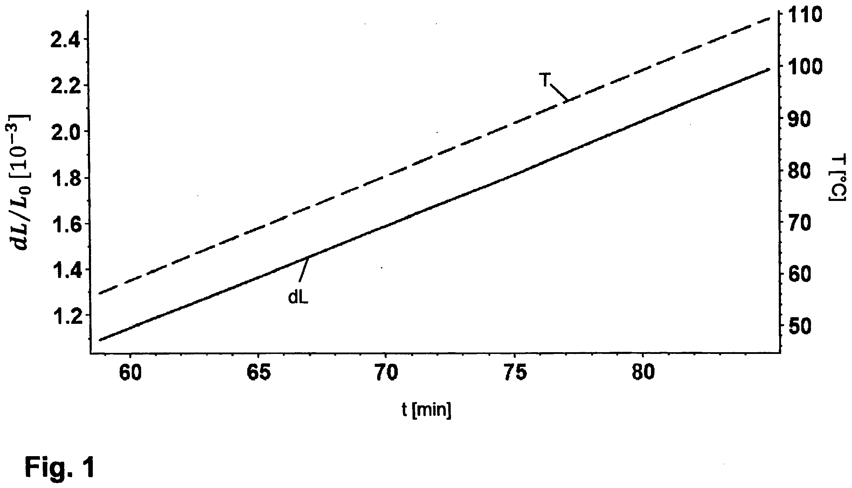

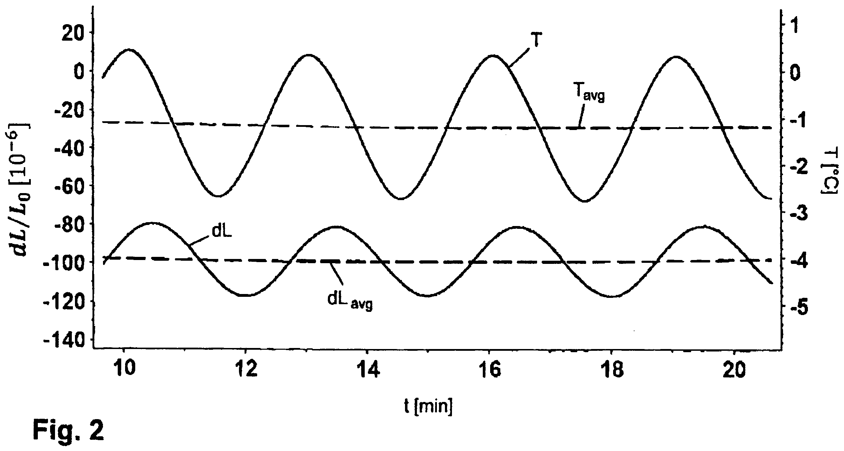

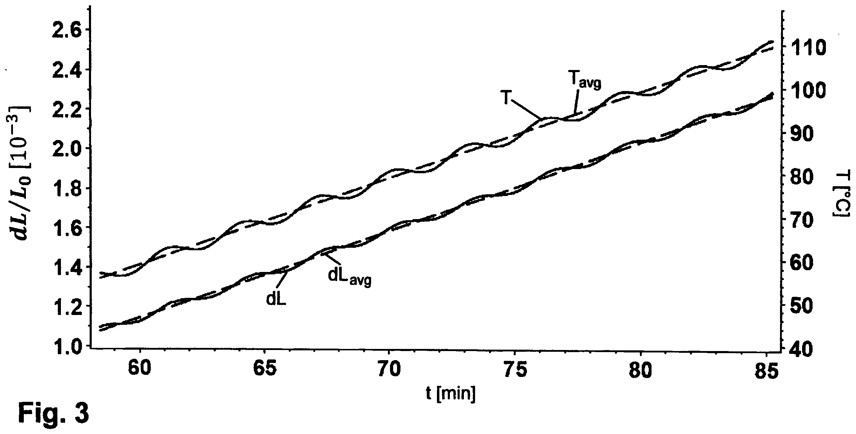

Die Fig. 1 bis 3 veranschaulichen beispielhaft eine Zusammensetzung aus einer linearen Temperaturänderung (Fig. 1) und einer sinusförmigen Temperaturmodulation (Fig. 2) zur Realisierung eines modulierten Temperaturprogrammes (Fig. 3). In den Fig. 1 bis 3 ist jeweils nach rechts die Zeit t und nach oben die Temperatur T aufgetragen.

Fig. 1 zeigt eine lineare Änderung der Temperatur T, die wie folgt beschrieben werden kann: $T = T_0 + (\beta \times t)$. Hierbei bezeichnen $T_0$ eine Anfangstemperatur und $\beta$ die Heizrate. Im Beispiel von Fig. 1 beträgt die Heizrate $\beta$ 2,0 K/min. Es ist anzumerken, dass hier und auch bei der unten folgenden Beschreibung der Erfindung der Einfachheit halber stets von einer Heizrate $\beta$ gesprochen wird, wenngleich diese Heizrate $\beta$ auch negativ vorgegeben werden kann (also einer "Kühlrate" entsprechend).

Fig. 2 zeigt eine sinusförmige Änderung der Temperatur T, die wie folgt beschrieben werden kann: $T = T_{avg} + A_T \times \sin(\omega t)$. Hierbei bezeichnen $T_{avg}$ eine (über die Periodendauer) gemittelte Temperatur, $A_T$ eine Amplitude der

Temperaturmodulation, und $\omega$ eine Modulationsfrequenz. Im Beispiel von Fig. 2 beträgt $T_{avg}$ etwa -1,2°C, $A_T$ 1,5 K, und $\omega$ etwa 2,1 min$^{-1}$ (entsprechend einer Periodendauer von 3,0 min).

Fig. 3 zeigt das modulierte Temperaturprogramm entsprechend einer Überlagerung der linearen Änderung (Fig. 1) und der sinusförmigen Änderung (Fig. 2), das wie folgt beschrieben werden kann: $T = T_0 + (\beta \times t) + A_T \times \sin(\omega t)$.

Bei einer damit durchgeführten TMA können sämtliche Parameter des modulierten Temperaturprogrammes (hier also: $T_0$, $\beta$, $A_T$ und $\omega$) z. B. dem konkreten Anwendungsfall angepasst von einem Benutzer definiert (voreingestellt) werden.

Auch bei einem modulierten Temperaturprogramm lässt sich eine (über die Periodendauer) gemittelte Temperatur $T_{avg}$ angeben. Für diese gilt: $T_{avg} = T_0 + (\beta \times t)$. Damit lässt sich das modulierte Temperaturprogramm auch wie folgt beschreiben: $T = T_{avg} + A_T \times \sin(\omega t)$.

Definiert man zur Beschreibung der modulationsbedingten "Temperaturoszillationen" eine Temperaturabweichung $\Delta T = A_T \times \sin(\omega t)$, so lässt sich das modulierte Temperaturprogramm schließlich auch wie folgt beschreiben: $T = T_{avg} + \Delta T$.

Der "thermische Ausdehnungskoeffizient $\alpha$" ist ein wichtiger Kennwert, der das Verhalten eines Materials bezüglich Veränderungen seiner Abmessungen bei Temperaturveränderungen beschreibt. Der thermische Ausdehnungskoeffizient $\alpha$ (nur abhängig von der Temperatur) ist eine stoffspezifische Materialkonstante, die in der Regel mehr oder weniger stark selbst temperaturabhängig ist. Der thermische Ausdehnungskoeffizient $\alpha$ wird hier im Sinne eines Längenausdehnungskoeffizienten (im Unterschied zum oftmals auch verwendeten thermischen Raumausdehnungskoeffizienten $\gamma$) verstanden, und ist die Proportionalitätskonstante zwischen der Temperaturänderung dT und der (reversiblen) relativen Längenänderung dL/L des Materials: $dL/L = \alpha \times dT$. Es gilt demnach: $\alpha = \frac{1}{L} \times \frac{dL}{dT}$.

In der Situation gemäß Fig. 1 (lineare Temperaturänderung) gilt $dL = L \times \alpha \times dT$ und $dT = \beta \times dt$ und mithin: $dL = L \times \alpha \times \beta \times dt$.

Daraus lässt sich der thermische Ausdehnungskoeffizient $\alpha$ wie folgt bestimmen:

$$\alpha = \frac{1}{L\beta} \times \frac{dL}{dt}$$

Der in Fig. 1 lineare Verlauf der Längenänderung $dL/L_0$ in Abhängigkeit von der Zeit t ist gleichbedeutend damit, dass $\alpha$ in diesem (idealisierten) Beispiel eine temperaturunabhängige Konstante ist.

In der Situation gemäß Fig. 3 (Moduliertes Temperaturprogramm mit linearer zugrundeliegender Aufheizung) gibt es bei der Längenänderung zwei Komponenten, nämlich eine (durch die Basisheizrate $\beta \neq 0$ bedingte) "hinterliegende Komponente" und eine (bedingt durch die Temperaturoszillationen) "oszillierende Komponente". Ein "hinterliegendes dL" lässt sich als Mittelwert über eine Periode berechnen und und wird im Folgenden als $dL_{total}$ bezeichnet. Hier gilt $dL_{total} = dL_{total} \times \alpha \times dT_{avg}$ und $dt_{avg} = \beta \times dt$ und mithin: $dL_{total} = L_{total} \times a \times \beta \times dt$.

Daraus lässt sich der thermische Ausdehnungskoeffizient $\alpha_{total}$ aus dem $dL_{total}$ wie folgt bestimmen:

$$\alpha_{total} = \frac{1}{L_{total}\beta} \times \frac{dL_{total}}{dt} \qquad \text{(Formel 1)}$$

Der in Fig. 3 lineare Verlauf der Längenänderung $dL_{total}/L_0$ in Abhängigkeit von der Zeit t ist gleichbedeutend damit, dass $\alpha_{total}$ in diesem (idealisierten) Beispiel eine temperaturunabhängige Konstante ist.

In der Situation gemäß Fig. 2 (Temperaturmodulation) gilt unter der Annahme, dass "T" die gleichmäßige Temperatur der betreffenden Materialprobe ist, ebenfalls $\Delta L = L \times \alpha \times \Delta T$, und $\Delta T = A_T \times \sin(\omega t)$, woraus für eine "Längenänderung" $\Delta L$ folgt:

$$\Delta L = L \times \alpha \times A_T \times \sin(\omega t).$$

Das ist korrekt jedoch nur für eine "ideale" Situation, in welcher die Probentemperatur in jedem Punkt der Probe gleich groß ist, also insbesondere z. B. im Zentrum und auf der Oberfläche der Probe. Das ist in der Praxis jedoch nicht der Fall, da es voraussetzen würde, dass die Modulationfrequenz $\omega$ unendlich klein oder die Temperaturleitfäigkeit des Probenmaterials unendlich groß wäre.

Definiert man zur Beschreibung der modulationsbedingten "Längenoszillationen" eine Amplitude der Längenänderung als $A_L$, so gilt:

$$\Delta L = A_L \times \sin(\omega t).$$

$A_L$ ist die Amplitude der gemessenen modulierten Längenänderungen. Sie kann aus einem für diese Längenänderungen repräsentativen Messsignal z. B. durch eine Fourier-Analyse (z. B. "Fast Fourier Transformation") berechnet werden.

Daraus lässt sich der (reversible) thermische Ausdehnungskoeffizient $\alpha_{rev}$ aus der oszillierenden Komponente des Messignales theoretisch für ideale Situation wie folgt bestimmen:

$$\alpha_{rev} = \frac{1}{L} \times \frac{A_L}{A_T} \qquad \text{(Formel 2)}$$

In der Praxis ergibt sich jedoch das auch im Beispiel von Fig. 2 zum Ausdruck kommende Problem, dass die Temperaturen in verschiedenen Bereichen der Probe mehr oder weniger voneinander und von demjenigen Temperaturverlauf abweichen, der durch eine in der verwendeten thermomechanischen Analyseinrichtung verwendete Temperierungseinrichtung gemäß des modulierten Temperaturprogrammes vorgegeben wird. Durch das von außen erfolgende Aufheizen und Abkühlen der Probe entsteht in der Praxis stets ein mehr oder weniger großer, nicht zu vernachlässigender Temperaturgradient im Inneren der Probe.

So kommt in der Praxis aufgrund der nicht unendlich raschen Wärmeleitung von Wärme in die Probe hinein und aus der Probe heraus z. B. zu einem "Nachhinken" der Probentemperatur, die in Fig. 2 zu einer zeitlichen Verschiebung der Längenoszillationen (Kurve dL) relativ zu den Temperaturoszillationen (Kurve T) führt. Gleichzeitig hat dieser Effekt zu Folge, dass der mittlere Wert (gemittelt über gesamte Probe) der Temperaturamplitude $A_T$ kleiner als durch das Temperaturprogramm vorgegeben ausfällt. Dies wiederum hat zur Folge, dass auch die Längenänderungsamplitude $A_L$ kleiner ausfällt.

In der Realität ist die Temperaturamplitude im Zentrum der Probe kleiner als die (z. B. durch einen Benutzer durch entsprechende Einstellung) vorgegebene Temperaturamplitude $A_T$ an der Probenoberfläche. Deshalb ist die Amplitude der Längenoszillationen der Probe $A_L$ kleiner als in der erwähnten idealen Situation, und die Längenoszillationen sind verspätet bezüglich der Temperaturoszillationen. Für reale Modulationen ist ein frequenzabhängiger komplexer Kalibrierungskoeffizient (Korrekturkoeffizient) k notwendig, um den korrigierten reversiblen thermischen Ausdehnungskoeffizienten $\alpha_{rev}$-corr zu erhalten:

$$\alpha_{rev\text{-}corr} = k \times \alpha_{rev} \qquad \text{(Formel 3)}$$

$$\Delta L = k \times L_{total} \times \alpha_{rev} \times A_T \times \sin(\omega t).$$

Falls ein moduliertes Temperaturprogramm (z. B. der in Fig. 3 dargestellten Art) eingesetzt wird, welches also zusätzlich die zugrundeliegende, z. B. lineare Temperaturänderung (vgl. Fig. 1) beinhaltet, kann vorteilhaft eine derartige "Kalibrierung" durchgeführt werden, so dass eine kalibrierte Bestimmung des thermischen Ausdehnungskoeffizienten $\alpha$ ermöglicht ist:

$$\alpha_{rev-corr} = \frac{1}{L_{total}} \times \frac{1}{k} \times \frac{A_L}{A_T} \qquad \text{(Formel 4)}$$

Im Allgemeinen, und insbesondere falls die Probe bei der Temperatur bzw. Temperaturänderung im Verlauf der thermomechanischen Analyse einem thermisch bedingten Umwandlungsprozess unterliegt, besitzt eine (unmittelbar gemessene) "totale" Längenänderung $dL_{total}$ eine "reversible" Komponente $dL_{rev}$ und eine "nichtreversible" Komponente $dL_{nonrev}$, und es gilt: $dL_{total} = dL_{rev} + dL_{nonrev}$.

$dL_{total}$ kann berechnet werden als ein (z. B. über genau eine Periode gemittelter) Mittelwert des zeitaufgelöst gemessenen Wertes von dL.

$dL_{rev}$ kann berechnet werden als $dL_{rev} = dL_{o\ rev} + L_o \times \int_{T_o}^{T} \alpha_{rev} dT$, wobei $dL_{o\ rev}$ die reversible Längenänderung am Anfang des Temperatursegmentes ist. Am Anfang der Messung gilt: $dL_{rev}=0$.

Dementsprechend besitzt ein bei Betrachtung von $dL_{total}$ unmittelbar erhältlicher "totaler" thermischer Ausdehnungskoeffizient $\alpha_{total}$ eine "reversible" Komponente $\alpha_{rev}$ und eine "nichtreversible" Komponente $\alpha_{nonrev}$, und es gilt: $\alpha_{total} = \alpha_{rev} + \alpha_{nonrev}$.

In den Fig. 1 bis 3 sind, unter der Annahme einer rein reversiblen Wärmeausdehnung ($dL_{total} = dL_{rev}$, $dL_{nonrev} = 0$, $\alpha_{total} = \alpha_{rev}$, $\alpha_{nonrev} = 0$), gleichbedeutend damit, dass die Probe bei der thermomechanischen Analyse keinem thermisch bedingten Umwandlungsprozess unterliegt (z. B. Probe aus einem Metall), jeweils nach oben zusätzlich aufgetragen auch die sich ergebenden relativen Längenänderungen $dL/L_0$, wobei $L_0$ eine Anfangslänge der analysierten Probe bezeichnet (Der Unterschied zwischen L und $L_0$ ist in der Praxis zumeist vernachlässigbar).

Unter der Voraussetzung, dass die Probe bei der thermomechanischen Analyse keinem thermisch bedingten Umwandlungsprozess unterliegt ($\alpha_{total} = \alpha_{rev\text{-}corr}$), lässt sich der Korrekturparameter k aus Formel (1) und (3) berechnen als der Quotient aus dem "totalen Ausdehnungskoeffizienten" $\alpha_{total}$, der eine "totale gemittelte Längenänderung" $\Delta L_{avg}$ (betrachtet über eine relativ große Temperaturänderung $\Delta T_{avg}$) charakterisiert, und dem "reversiblen Ausdehnungskoeffizienten" $\alpha_{rev}$, der eine "reversible Komponente $dL_{rev}$ der Längenänderung" dL (betrachtet über eine relativ kleine Temperaturänderung dT) charakterisiert:

$$k = \alpha_{total} \,/\, \alpha_{rev} \qquad\qquad \text{(Formel 5)}$$

Die zur Bestimmung des Korrekturparameters k benötigten Größen $\alpha_{total}$ und $\alpha_{rev}$ sind wie folgt erhältlich:

$$\alpha_{total} = 1/L_{total} \times dL_{total}/dT_{avg} \quad \text{und} \quad \alpha_{rev} = 1/L_{total} \times A_L/A_T$$

Mittels des in dieser Weise ermittelten Korrekturparameters k lässt sich somit vorteilhaft eine korrigierte reversible Komponente $dL_{rev}\text{-}_{corr}$ der Längenänderung dL bzw. eine korrigierte reversible Komponente $\alpha_{rev}\text{-}_{corr}$ des (reversiblen) thermischen Ausdehnungskoeffizienten $\alpha_{rev}$ berechnen (vgl. obige Formel 4).

Diese Methode scheitert jedoch, falls die Probe im Verlauf des modulierten Temperaturprogrammes einem thermisch bedingten Umwandlungsprozess unterliegt.

Es ist eine Aufgabe der vorliegenden Erfindung, bei einer TMA der eingangs genannten und z. B. in der US 6,007,240 beschriebenen Art die Berechnung einer korrigierten reversiblen Komponente der Längenänderung und/oder einer korrigierten reversiblen Komponente des thermischen Ausdehnungskoeffizienten auch für Bereiche zu ermöglichen, in denen die Probe bei der thermomechanischen Analyse einem thermisch bedingten Umwandlungsprozess unterliegt.

Diese Aufgabe wird bei dem erfindungsgemäßen Verfahren dadurch gelöst, dass das Temperaturprogramm ein erstes Segment mit einer ersten Basisheizrate besitzt und der Korrekturparameter anhand von Daten aus dem ersten Segment temperaturabhängig aus einer Schätzung einer temperaturabhängigen Funktion des genannten Verhältnisses in einem Bereich des ersten Segmentes berechnet wird, in welchem die Probe keinem thermisch bedingten Umwandlungsprozess unterliegt, und dass das Temperaturprogramm ein zweites Segment mit einer z. B. gegenüber der ersten Basisheizrate kleineren zweiten Basisheizrate besitzt und für eine Berechnung der korrigierten reversiblen Komponente der Längenänderung und/oder des thermischen Ausdehnungskoeffizienten im zweiten Segment der anhand der Daten aus dem ersten Segment berechnete Korrekturparameter verwendet wird.

Der Erfindung liegt somit die Idee zugrunde, den Korrekturparameter einschließlich seiner "Temperaturabhängigkeit" in einem hierfür geeigneten (ersten) Segment des Temperaturprogrammes zu berechnen, und dieses Berechnungsergebnis sodann für die Bestimmung bzw. Berechnung des in einem anderen (zweiten) Segment des Temperaturprogrammes zu verwendenden Korrekturparameters zu nutzen. Dies ist selbst dann möglich, wenn im zweiten Segment die Probe (wenigstens) einem thermisch bedingten Umwandlungsprozess unterliegt.

Die Nutzung des im ersten Segment temperaturabhängig berechneten Korrekturparameters kann z. B. nach Art einer Extrapolation vorgesehen sein.

In einer Ausführungsform ist vorgesehen, dass der Betrag der zweiten Basisheizrate gleich dem Betrag der ersten Basisheizrate ist. Dies kann insofern von Nachteil sein, als - bedingt durch die Temperaturänderung im Verlauf des zweiten Segmentes - die dortige Nutzung das aus dem ersten Segment stammenden Ergebnisses der Korrekturparameterberechnung einen gewissen Fehler mit sich bringen kann.

In einer diesbezüglich anderen Ausführungsform ist daher vorgesehen, dass der Betrag der zweiten Basisheizrate absolut betrachtet relativ klein und/oder kleiner als der Betrag der ersten Basisheizrate ist. Im Extremfall kann sogar eine zweite Heizrate von Null vorgesehen werden.

Damit kann auch vor dem Hintergrund, dass der Korrekturparameter im allgemeinen temperaturabhängig ist, die vorerwähnte Verfälschung vermieden werden.

In einer Ausführungsform ist vorgesehen, dass die erste Basisheizrate größer als Null ist (entsprechend einer modulierten Aufheizung der Probe im ersten Segment).

In einer Ausführungsform ist vorgesehen, dass die zweite Basisheizrate größer oder gleich Null ist (entsprechend einer modulierten Aufheizung bzw. modulierten Temperaturkonstanthaltung der Probe im zweiten Segment).

In einer Ausführungsform ist vorgesehen, dass der Betrag der ersten Basisheizrate größer als 0,5 K/min, insbesondere größer als 1 K/min ist, wobei dieser Betrag jedoch z. B. kleiner als 100 K/min, insbesondere kleiner als 50 K/min sein kann.

In einer Ausführungsform ist vorgesehen, dass der Betrag der zweiten Basisheizrate kleiner als 0,5 K/min, insbesondere kleiner als 0,2 K/min ist.

In einer Ausführungsform ist vorgesehen, dass die Beträge der ersten Basisheizrate und der zweiten Basisheizrate sich um mindestens einen Faktor 2, insbesondere mindestens um einen Faktor 5, voneinander unterscheiden.

In einer Ausführungsform ist vorgesehen, dass die Probe innerhalb des zweiten Segmentes einem thermisch bedingten Umwandlungsprozess unterliegt.

In einer Ausführungsform ist vorgesehen, dass die Temperatur der Probe im Verlauf des zweiten Segmentes ansteigt und einen Wert von 500 °C überschreitet, insbesondere einen Wert von 1000 °C überschreitet. Dies ist insofern vorteilhaft, als bei vielen Materialien erst bei diesen relativ hohen Temperaturen mit thermisch bedingten Umwandlungsprozessen zu rechnen ist, die jedoch mittels der Erfindung durch eine entsprechende Wahl des "zweiten Segmentes" vorteilhaft untersucht werden können.

In einer Ausführungsform ist vorgesehen, dass beim Auswerten der Daten ferner eine nichtreversible Komponente der Längenänderung ermittelt wird. Alternativ oder zusätzlich kann auch eine nichtreversible Komponente des thermischen Ausdehnungskoeffizienten ermittelt werden.

In einer Ausführungsform ist vorgesehen, dass für den anhand von Daten aus dem ersten Segment berechneten Korrekturparameter eine mathematische Schätzfunktion modelliert wird, welche den Korrekturparameter in Abhängigkeit von der Temperatur der Probe angibt, und dass anhand der mathematischen Schätzfunktion der für eine Berechnung der korrigierten reversiblen Komponente der Längenänderung, alternativ oder zusätzlich der korrigierten reversiblen Komponente des thermischen Ausdehnungskoeffizienten, im zweiten Segment zu verwendende Korrekturparameter berechnet wird. Der im zweiten Segment verwendete Korrekturparameter ist in diesem Fall also ein mittels der Schätzfunktion aus dem ersten in das zweite Segment extrapolierter Parameter.

In einer Ausführungsform ist vorgesehen, dass bei der Berechnung der Schätzfunktion mehrere "Stützpunkte" (bevorzugt wenigstens 2, insbesondere wenigstens 5) herangezogen werden, um damit eine temperaturabhängige Schätzfunktion für den Korrekturparameter mit relativ hoher Genauigkeit zu berechnen.

Als Schätzfunktion kommt z. B. eine lineare Funktion oder z. B. ein Polynom (z. B. Parabel) in Betracht.

In einer Ausführungsform ist die mathematische Form der beim Auswerten der Daten eingesetzten Schätzfunktion fest vorgegeben. Alternativ kann eine vom Benutzer vorgebbare oder auswählbare mathematische Form verwendet werden. Die "Modellierung" der mathematischen Schätzfunktion kann in diesen Fällen als Berechnung der betreffenden Funktionsparameter betrachtet werden (z. B. durch die Methode der "kleinsten Fehlerquadrate" oder einen anderen Anpassungsalgorithmus).

Beim Übergang von einem z. B. dynamischen ($\beta \neq 0$) ersten Segment zu einem unmittelbar benachbarten zweiten, z. B isothermen ($\beta = 0$) Segment, oder umgekehrt, tritt vorteilhaft keine Unstetigkeitsstelle im temperaturabhängigen Verlauf des berechneten Korrekturparameters (und folglich auch nicht im Verlauf der berechneten reversiblen Größen $dL_{rev}$ bzw. $\alpha_{rev}$) auf.

In einer Ausführungsform ist vorgesehen, dass im Verlauf des Temperaturprogrammes das zweite Segment zeitlich betrachtet unmittelbar nach dem ersten Segment liegt, oder umgekehrt.

In einer bevorzugten Ausführungsform wird eine Fourier-Analyse angewandt, um aus den gemessenen Daten betreffend ein für die Längenänderung der Probe repräsentatives Signal Mittelwerte, Amplituden und Phasenverschiebungen (bezüglich eines Temperatursignals) zu ermitteln. Eine Fourier-Analyse hat z. B. den Vorteil, dass Einflüsse eines Signalrauschens nicht berücksichtigt werden.

Um Mittelwerte, Amplituden und Phasenverschiebungen zu ermitteln, kommt jedoch alternativ z. B. auch in Betracht, dies auf Basis einer Mittelwert- und Amplitudenermittlung ohne Fourier-Analyse zu bewerkstelligen. Mittelwerte können hierbei z. B. als mathematischer Mittelwert zwischen unmittelbar benachbarten Maxima und Minima berechnet werden.

Eine bevorzugte Anwendung des erfindungsgemäßen Verfahrens ist die so genannte Dilatometrie, einer speziellen Art der TMA, bei welcher nämlich im engeren Sinne temperaturabhängig die Längenänderung einer Probe unter vernachlässigbarer Kraftbelastung ermittelt wird (z. B. Kraft von maximal 0,5 N). Darüber hinaus kommt z. B. auch eine Anwendung im Rahmen einer DMA (Dynamisch-mechanische Analyse) in Betracht. Die DMA zielt primär darauf ab, eine Deformationskraft an einer Probe als Funktion der Temperatur und/oder Zeit unter definierter dynamisch-mechanischer Deformation zu messen.

Gemäß eines weiteren Aspekts der Erfindung ist eine Vorrichtung zur thermomechanischen Analyse einer Probe eines Materials vorgesehen, umfassend

- eine Probenaufnahme zum Aufnehmen der Probe,

- eine Temperiereinrichtung zum Temperieren der Probe gemäß eines modulierten Temperaturprogrammes,

- eine Temperaturmesseinrichtung zur Messung einer Temperatur der Probe im Verlauf der Temperierung,

- eine Längenmesseinrichtung zur Messung einer Längenänderung der Probe im Verlauf der Temperierung,

- eine Datenaufzeichnungseinrichtung zum Aufzeichnen von Daten, die repräsentativ für die Längenänderung der Probe im Verlauf der Temperierung sind, und von Daten, die repräsentativ für die Änderung der Temperatur der Probe im Verlauf der Temperierung sind,

- eine Auswerteeinrichtung, die dazu ausgebildet ist, eine reversible Komponente der Längenänderung und/oder eine reversible Komponente des thermischen Ausdehnungskoeffizienten der Probe zu ermitteln und eine korrigierte reversible Komponente der Längenänderung und/oder des thermischen Ausdehnungskoeffizienten mittels eines Korrekturparameters zu berechnen, der unter Verwendung eines aus den Daten ermittelten Verhältnisses eines eine totale Längenänderung charakterisierenden Parameters und eines die reversible Komponente der Längenänderung charakterisierenden Parameters berechnet wird,

dadurch gekennzeichnet, dass die Temperiereinrichtung dazu ausgebildet ist, im Verlauf des Temperaturprogrammes ein erstes Segment mit einer ersten Basisheizrate und ein zweites Segment mit einer (z. B. gegenüber der ersten Basisheizrate kleineren) zweiten Basisheizrate vorzusehen, und dass die Auswerteeinrichtung dazu ausgebildet ist, den Korrekturparameter anhand von Daten aus dem ersten Segment temperaturabhängig aus einer Schätzung einer temperaturabhängigen Funktion des genannten Verhältnisses in einem Bereich des ersten Segmentes zu berechnen, in welchem die Probe keinem thermisch bedingten Umwandlungsprozess unterliegt, und für eine Berechnung der korrigierten reversiblen Komponente der Längenänderung und/oder des thermischen Ausdehnungskoeffizienten im zweiten Segment den anhand der Daten aus dem ersten Segment berechneten Korrekturparameter zu verwenden.

Die für das erfindungsgemäße Analyseverfahren beschriebenen besonderen Ausführungsformen und Weiterbildungen können, einzeln oder in beliebiger Kombination, in analoger Weise auch als besondere Ausgestaltungen bzw. Weiterbildungen der erfindungsgemäßen Analysevorrichtung vorgesehen werden.

Gemäß eines weiteren Aspekts der Erfindung ist ein Computerprogrammprodukt vorgesehen, umfassend einen Programmcode, der auf einer Datenverarbeitungseinrichtung ausgeführt ein Analyseverfahren der hier beschriebenen Art durchführt. Ein derartiges Computerprogrammprodukt kann insbesondere zur Programmierung bzw. zur Ablaufsteuerung einer in der erfindungsgemäß vorgesehenen Analyseeinrichtung enthaltenen Steuereinheit eingesetzt werden.

Die Erfindung wird nachfolgend anhand von Ausführungsbeispielen mit Bezug auf die beigefügten Zeichnungen weiter beschrieben. Es stellen dar:

Fig. 1   ein Diagramm zur Veranschaulichung einer linaren Temperaturänderung und der Messung einer dadurch bewirkten Längenänderung an einer Probe,

Fig. 2   ein Diagramm zur Veranschaulichung einer sinusförmigen Temperaturänderung und der Messung einer dadurch bewirkten Längenänderung an der Probe,

Fig. 3   ein Diagramm zur Veranschaulichung eines modulierten Temperaturprogrammes, zusammengestzt aus einer linaren Temperaturänderung (Fig. 1) und einer Temperaturmodulation (Fig. 2), und der Messung einer dadurch bewirkten Längenänderung an der Probe,

Fig. 4   ein Diagramm zur Veranschaulichung des Ergebnisses einer thermomechanischen Analyse gemäß eines ersten Beispiels (Probe aus Metall),

Fig. 5   ein Diagramm zur Veranschaulichung des Ergebnisses einer thermomechanischen Analyse gemäß eines zweiten Beispiels (Probe aus Keramik),

Fig. 6   ein Diagramm zur Veranschaulichung eines Zwischenergebnisses einer thermomechanischen Analyse gemäß eines dritten Beispiels (Probe aus Keramik),

Fig. 7   ein Diagramm zur Veranschaulichung des Ergebnisses der thermomechanischen Analyse gemäß des dritten Beispiels, und

Fig. 8   eine Vorrichtung zur thermomechanischen Analyse einer Probe gemäß eines Ausführungsbeispiels.

Die Fig. 1 bis 3 wurden bereits weiter oben erläutert und veranschaulichen eine lineare Temperaturänderung (Fig. 1), eine Temperaturmodulation (Fig. 2), und ein durch Kombination dieser Temperaturänderungen resultierendes moduliertes Temperaturprogramm (Fig. 3).

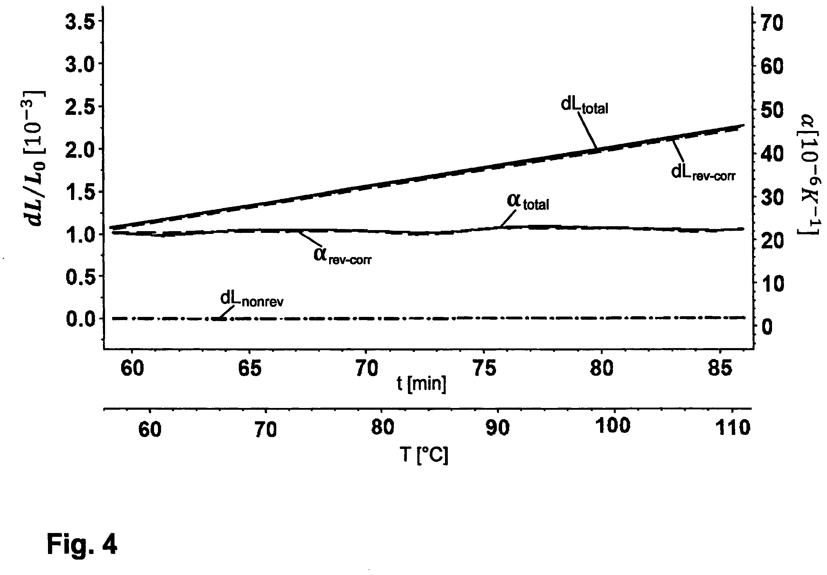

Fig. 4 veranschaulicht das Ergebnis einer nicht-erfindungsgemäßen thermomechanischen Analyse gemäß eines ersten Beispiels, bei welchem das in Fig. 3 gezeigte Temperaturprogramm verwendet wurde und die analysierte Probe aus einem Metall besteht, welches bei der thermomechanischen Analyse, hier also über einen Temperaturbereich von etwa 60-110°C, keinem thermisch bedingten Umwandlungsprozess unterliegt.

Insofern entspricht dieses Beispiel dem bereits beschriebenen Beispiel gemäß Fig. 3, wobei jedoch in Fig. 4 als ein Ergebnis der TMA insbesondere die mittels des erwähnten Korrekturparameters k erhaltenen zeitabhängigen Verläufe der korrigierten Größen $dL_{rev\text{-}corr}$ und $\alpha_{rev\text{-}corr}$ eingezeichnet sind.

Des weiteren sind in Fig. 4 die Verläufe der totalen relativen Längenänderung $dL_{total}$ und der nichtreversiblen relativen Längenänderung $dL_{nonrev}$ eingezeichnet. $dL_{nonrev}$ wurde hier erhalten als $dL_{nonrev} = dL_{total} - dL_{rev\text{-}corr}$.

Schließlich ist in Fig. 4 noch der Verlauf des totalen thermischen Ausdehnungskoeffizienten $\alpha_{total}$ eingezeichnet.

Da der zeitabhängige Verlauf der Temperatur T, also das "Temperaturprogramm" bekannt ist, lassen sich die gemäß Fig. 4 erhaltenen Verläufe ohne weiteres auch in temperaturabhängige Verläufe der eingezeichneten Größen umrechnen. Im Falle der hier konstant vorgegebenen Basisheizrate $\beta$ entsprechen die in Fig. 4 erkennbaren Verläufe sogar qualitativ exakt den jeweiligen "temperaturabhängigen Verläufen" (vgl. hierzu die in Fig. 4 zusätzlich eingezeichnete Temperaturachse). Ansonsten, im Falle einer nicht konstanten Basisheizrate, könnten die zeitabhängigen Verläufe unter Berücksichtigung des zeitabhängigen Verlaufes der gemittelten Temperatur $T_{avg}$ ebenfalls leicht "umgerechnet" werden.

Die Ermittlung des Korrekturparameters k ist in diesem Beispiel völlig unproblematisch, da die Probe im Verlauf des modulierten Temperaturprogrammes keinem thermisch bedingten Umwandlungsprozess unterliegt.

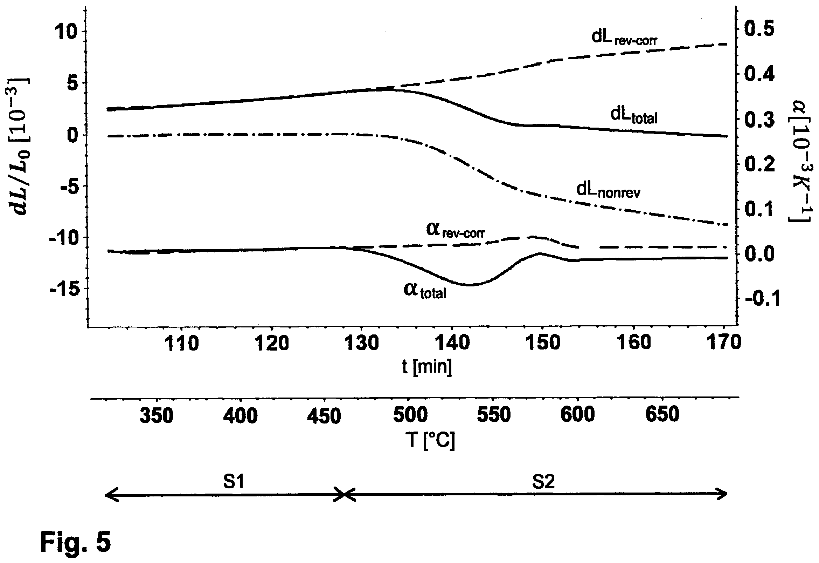

Die Erfindung zielt jedoch darauf ab, die Berechnung einer korrigierten reversiblen Komponente der Längenänderung $dL_{rev\text{-}corr}$ und/oder einer korrigierten reversiblen Komponente des thermischen Ausdehnungskoeffizienten $\alpha_{rev\text{-}corr}$ auch dann zu ermöglichen, wenn die Probe einem thermisch bedingten Umwandlungsprozess unterliegt. Ein Beispiel hierfür zeigt Fig. 5.

Fig. 5 zeigt das Ergebnis einer erfindungsgemäßen TMA (hier: Dilatometrie) gemäß eines Beispiels, bei welchem ein moduliertes Temperaturprogramm verwendet wurde und die analysierte Probe aus einer Keramik besteht, bei welcher um eine Temperatur im Bereich von etwa 500-600°C ein thermisch bedingter Umwandlungsprozess zu erwarten ist. In Fig. 5 ist ein Ausschnitt des TMA-Ergebnisses für den Temperaturbereich von etwa 350°C bis 700°C dargestellt.

Eine Besonderheit dieses Beispiels besteht darin, dass das Temperaturprogramm ein erstes Segment S1 mit einer ersten Basisheizrate $\beta$1 (hier z. B. ca. 5 K/min) besitzt und der Korrekturparameter k anhand von Daten aus diesem ersten Segment S1 berechnet wird, und dass das Temperaturprogramm ein zweites Segment S2 mit einer zweiten Basisheizrate $\beta$2 (hier z. B. ca. 5 K/min) besitzt und für eine Berechnung der korrigierten reversiblen Komponente $dL_{rev\text{-}corr}$ der Längenänderung dL im zweiten Segment S2 der anhand der Daten aus dem ersten Segment S1 temperaturabhängig berechnete Korrekturparameter k verwendet wird.

Der in dem hierfür geeigneten (mangels thermisch bedingtem Umwandlungsprozess) Segment S1 des Temperaturprogramms berechnete Korrekturparameter k wird gewissermaßen in das sich zu höheren Temperaturen hin anschließende zweite Segment S2 hinein extrapoliert (und dort zur Berechnung der Verläufe von $dL_{rev\text{-}corr}$ und $\alpha_{rev\text{-}corr}$ verwendet).

Beispielsweise könnte der als ein Ergebnis der im ersten Segment S1 durchgeführten Korrekturparameterberechnung für das Ende des ersten Segmentes S1 (also bei etwa t = 128 min bzw. T = 460°C) erhaltene Wert von k als der über das gesamte zweite Segment S2 für die Korrektur zu verwendende Korrekturparameter k vorgesehen werden. Bevorzugt wird jedoch als ein Ergebnis der im ersten Segment S1 durchgeführten Korrekturparameterberechnung eine den im ersten Segment S1 sich ergebenden temperaturabhängigen Verlauf des Korrekturparameters k beschreibende mathematische Funktion modelliert, um sodann durch Einsetzen der im zweiten Segment herrschenden Temperaturen in diese Funktion den temperaturabhängigen Korrekturparameter zur Korrektur im zweiten Segment S2 zu erhalten (Extrapolation).

Dies erlaubt vorteilhaft die Korrektur der reversiblen Größen auch im zweiten Segment S2, obwohl dort die Probe dem thermisch bedingten Umwandlungsprozess unterliegt.

Abweichend vom dargestellten Beispiel, bei welchem die Basisheizraten $\beta$1, $\beta$2 der Segmente S1, S2 gleich groß gewählt sind ($\beta$1 = $\beta$2 = 5 K/min), könnte eine etwaige Verfälschung der auf das Segment S2 durch "Extrapolation" ausgedehnten Korrektur aufgrund einer Temperaturabhängigkeit des Korrekturparameters k noch reduziert bzw. vermieden werden, indem die im zweiten Segment S2 verwendete Basisheizrate $\beta$2 vergleichsweise klein (oder sogar zu $\beta$2=0) gewählt wird.

Im in Fig. 5 dargestellten Beispiel wurde mittels der aufgenommen Daten aus dem ersten Segment S1 der Korrekturparameter k in Form einer temperaturabhängigen Korrektur-Schätzfunktion berechnet, beispielsweise durch eine an sich bekannte Anpassung ("Fit", z. B. nach der Methode der kleinsten Fehlerquadrate, oder dergleichen) einer vorbestimmten mathematischen Funktion, welche den Korrekturparameter k in Abhängigkeit von der Temperatur T der

8

Probe angibt. Mittels dieser Schätzfunktion wurde sodann der Korrekturparameter k zur Verwendung im zweiten Segment S2 berechnet und dort verwendet, um die Verläufe von $dL_{rev-corr}$ und $\alpha_{rev-corr}$ (und daraus die übrigen in Fig. 5 eingezeichneten Größen) zu erhalten.

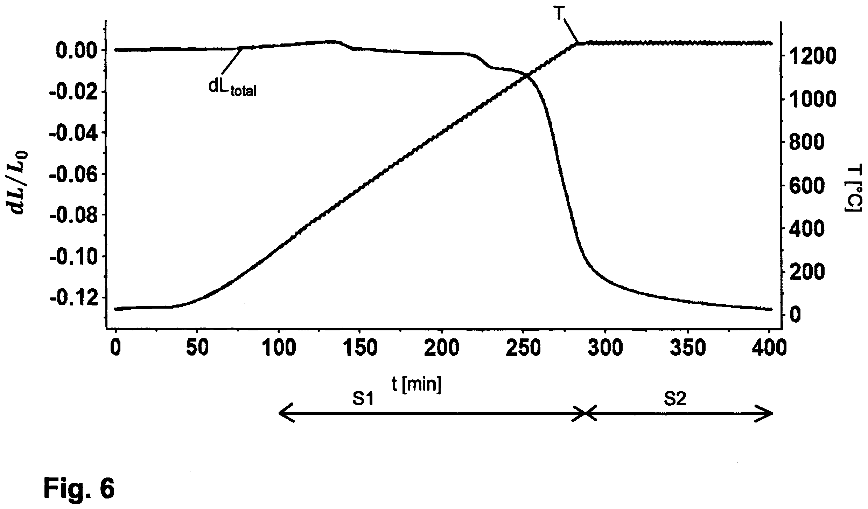

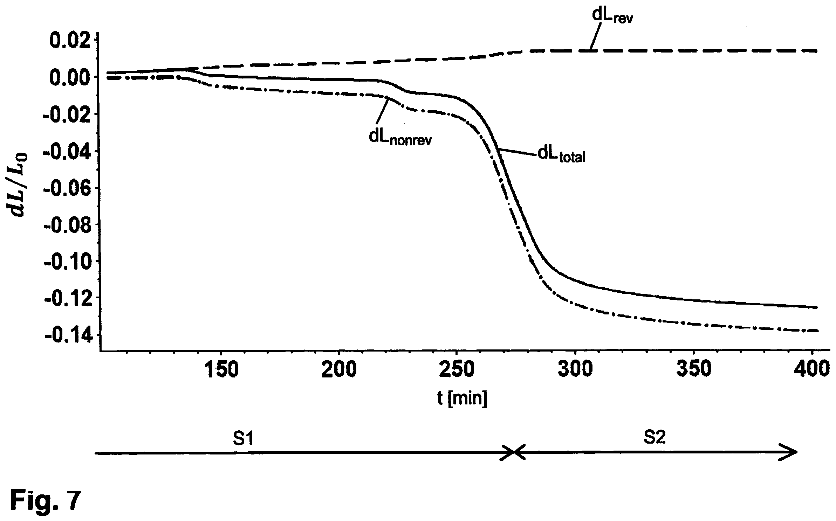

Die Fig. 6 und 7 zeigen ein weiteres Beispiel einer erfindungsgemäßen dilatometrischen Analyse einer Probe aus einer Keramik.

Fig. 6 zeigt das verwendete modulierte Temperaturprogramm, das ein erstes moduliertes Segment S1 im Zeitbereich von etwa 100 bis 280 min und sich daran unmittelbar anschließend ein zweites moduliertes Segment S2 im Zeitbereich von etwa 280 bis 400 min besitzt.

Im ersten modulierten Segment S1 besitzt das Temperaturprogramm eine erste Basisheizrate β1 von ca. 5 K/min, so dass die gemittelte Temperatur $T_{avg}$ ausgehend von etwa 315°C linear bis etwa 1225°C ansteigt.

Im zweiten Segment S2 ist eine wesentlich kleinere, zweite Basisheizrate β2 von ca. 0,1 K/min vorgesehen, so dass die gemittelte Temperatur $T_{avg}$ ausgehend von etwa 1225°C (Endtemperatur des ersten Segmentes S1) linear nurmehr um etwa 10°C auf etwa 1235°C ansteigt.

Die hier untersuchte Probe zeigt im Verlauf des Temperaturprogrammes mehrere thermisch bedingte Umwandlungsprozesse, nämlich bei Temperaturen um etwa 500°C, 945°C und 1130°C. Während die ersten beiden "Effekte" (bei 500°C und 945°C) somit im ersten Segment S1 liegen, erstreckt sich der letztere Effekt (bei 1130°C) über die Grenze zwischen den beiden Segmenten S1, S2 hinweg. Der Effekt beginnt bereits bei etwa 1130°C und endet bei 1225°C noch nicht.

Für die Berechnung der korrigierten reversiblen Komponente $dL_{rev}$-corr (siehe Fig. 7) der unmittelbar gemessenen totalen Längenänderung $dL_{total}$ (Fig. 6) wurde ein Korrekturparameter k temperaturabhängig anhand von Daten aus dem ersten Segment S1 berechnet, und zwar in einem Bereich von S1, in welchem kein thermischer Effekt auftritt, also z. B. anhand von Daten aus dem Zeitbereich von etwa 100 bis 130 min, entsprechend einem Temperaturbereich von etwa 315 bis 470°C.

Der Korrekturparameter k wurde hier wieder in Form einer Schätzung der temperaturabhängigen Funktion des Verhältnisses des totalen thermischen Ausdehnungskoeffizienten $\alpha_{total}$ und des reversiblen thermischen Ausdehnungskoeffizienten $\alpha_{rev}$ berechnet, wobei diese Ausdehnungskoeffizienten aus den im Bereich [100 min, 130 min] bzw. [315°C, 470°C] unmittelbar gemessenen bzw. vorbekannten Daten ($T_{avg}$, $\Delta T$, L, dL) erhalten wurden. Als Schätzfunktion kann z. B. im einfachsten Fall eine lineare Funktion verwendet werden (Änderung von k proportional zu Änderung der Temperatur). Abweichend davon könnten jedoch auch kompliziertere Schätzfunktionen, z. B. Polynome mindestens 2. Grades, verwendet werden.

Der in dieser Weise als temperaturabhängige Funktion berechnete Korrekturparameter k wird vorteilhaft jedoch nicht nur für die beabsichtigte Korrektur im Bereich [100 min, 130 min] bzw. [315°C, 470°C] verwendet, sondern (durch Extrapolation) über das gesamte modulierte Temperaturprogramm, also [100 min, 400 min] bzw. [315°C, 1235°C].

Abweichend vom beschriebenen Beispiel (Fig. 6 und 7), bei welchem im Segment S2 eine kleine, jedoch nichtverschwindende Basisheizrate β2 von ca. 0,1 K/min vorgesehen ist, könnte die im zweiten Segment S2 verwendete Basisheizrate β2 auch Null sein. Sehr vorteilhaft kann eine sehr kleine zweite Basisheizrate bzw. β2=0 beispielsweise dann sein, wenn zu Beginn des zweiten Segmentes die Temperatur so hoch ist, dass eine weitere Erhöhung der Temperatur im Verlauf des zweiten Segmentes S2 apparative Schwierigkeiten bereitet.

Ebenfalls abweichend vom beschriebenen Beispiel (Fig. 6 und 7), bei welchem das zweite Segment S2 zeitlich betrachtet nach dem ersten Segment S1 folgt, könnte im Rahmen der Erfindung auch das zweite Segment S2 (mit niedriger Heizrate β2) auch dem ersten Segment S1 (mit hoher Heizrate β1) vorangehen. Dies wäre z. B. dann sinnvoll, wenn die zu untersuchende Probe bei eher niedrigen Temperaturen einem oder mehreren thermisch bedingten Umwandlungsprozessen unterliegt, wohingegen bei eher hohen Temperaturen keine derartigen Umwandlungsprozesse stattfinden. Auch dann kann der in dem hierfür geeigneten (einen Bereich ohne thermisch bedingten Umwandlungsprozess enthaltenden) Segment S1 des Temperaturprogramms berechnete Korrekturparameter k gewissermaßen in das zeitlich vorangegangene (bei niedrigeren Temperaturen liegende) zweite Segment S2 hinein extrapoliert und dort zur Berechnung der Verläufe von $dL_{rev}$-corr und/oder $\alpha_{rev-corr}$ verwendet werden.

Gemäß der oben beschriebenen Analyseverfahren ist vorteilhaft gleichzeitig eine Analyse für dynamische Segmente (Heizrate β1 größer oder kleiner als 0) und isotherme Segmente (β2=0), oder nahezu isotherme Segmente (β2<β1 bzw. β2<<β1) möglich.

Die gemäß der Erfindung vorgesehenen temperaturmodulierten Messungen können vorteilhaft bis in einen relativ hohen Temperaturbereich hinein ausgedehnt werden, z. B. bis zu betriebsmäßig durch das Temperaturprogramm angefahrenen Endtemperaturen von $T_{avg}$ größer als 1000°C, insbesondere größer als 2000°C, so dass eine mögliche Anwendung z. B. die Analyse bzw. Charakterisierung des Sinterverhaltens von Keramiken ist.

Eine für ein dynamisches Segment (β≠0) des Temperaturprogrammes mittels eines Korrekturparameters k durchgeführte Kalibrierung der Messung reversibler Materialparameter (wie $dL_{rev}$ und $\alpha_{rev}$) kann vorteilhaft für ein oder mehrere andere Segmente, insbesondere z. B. für ein unmittelbar vorausgehendes oder ein unmittelbar nachfolgendes Segment (insbesondere z. B. mit relativ kleinem oder sogar als 0 gewähltem β) in der Berechnung des Analyseergebnisses berücksichtigt werden.

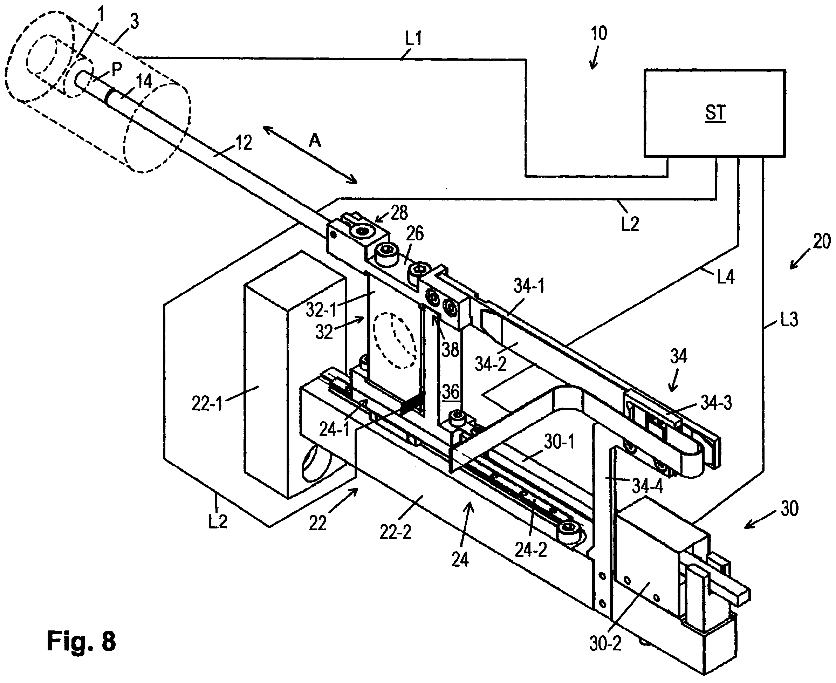

Fig. 8 zeigt ein Ausführungsbeispiel einer Vorrichtung 10 zur Durchführung eines Analyseverfahrens der hier beschriebenen Art. Die Vorrichtung 10 wird in diesem Beispiel im Rahmen einer thermomechanischen Analyse (TMA) verwendet (Alternativ könnte die Vorrichtung 10 auch in einem DMA (Dynamisch-mechanische Analyse)-Modus, also mit variabler Kraftvorbelastung, betrieben werden).

Ein Teil der Vorrichtungkomponenten sind in Fig. 8 gestrichelt dargestellt, nämlich ein Probenhalter 1 in einem gesteuert temperierbaren Ofen 3 zur Lagerung und ansteuerbaren Temperierung einer Probe P, an welcher die TMA-Messung durchzuführen ist.

Bei der Messung wird die Längenänderung (hier z. B. resultierend aus einer temperaturmodulierten Erwärmung oder Abkühlung der Probe P im Ofen 3) in einer Richtung gemessen, die nachfolgend als Längsrichtung bezeichnet wird und in Fig. 8 durch den Doppelpfeil A angegeben ist. Außerdem wird bei der Messung die Probe P einer vorbestimmten konstanten kleinen Kraftbelastung (z. B. etwa 0,1 N) ausgesetzt, die ebenfalls in Längsrichtung A auf die Probe P wirkt.

Während der Längen(änderungs)messung wird die vom Probenhalter 1 aufgenommene Probe P gemäß eines modulierten Temperaturprogrammes (z. B. der bereits beschriebenen Art) temperiert und die auf die Probe ausgeübte Kraft auf einen vorbestimmten konstanten Wert geregelt.

Die Vorrichtung 10 umfasst einen Fühlstempel 12, welcher bei der Messung mit einem Fühlstempelende 14 die vorbestimmte Kraft (hier: Druckkraft) auf die Probe P ausübt.

Das Material des Fühlstempels sollte bei dieser Anwendung eine möglichst geringe oder zumindest gut definierte thermische Ausdehnung besitzen, so dass diese thermische Ausdehnung das Messergebnis wenig beeinflusst bzw. im Rahmen eines Steuerprogrammes und/oder einer nachfolgenden Auswertung entsprechend berücksichtigt werden kann. Analoges gilt für das Material der Fühlstempelaufnahme.

Die Vorrichtung 10 umfasst des Weiteren eine Messeinrichtung 20, an welcher der Fühlstempel 12 angebracht ist und mittels welcher bei der Messung die aus der Längenänderung der Probe P in Längsrichtung A resultierende Bewegung des Fühlstempels 12 gemessen wird. Die Messeinrichtung 20 umfasst:

- eine stationäre Basis 22, die im dargestellten Beispiel ein erstes Basisteil 22-1 (z. B. zum Haltern des Ofens 3 bezüglich der Messeinrichtung 20) und ein zweites, langgestreckt in Längsrichtung A sich erstreckendes Basisteil 22-2 umfasst,

- eine an der stationären Basis 22 über eine Führungseinrichtung 24 in Längsrichtung A relativ zur stationären Basis 22 bewegbar gelagerte Fühlstempelaufnahme 26, an welcher der Fühlstempel 12 im dargestellten Beispiel mittels einer Schraubklemme 28 befestigt ist,

- eine ansteuerbare Antriebseinrichtung 30 zum Antreiben der Fühlstempelaufnahme 26 in Längsrichtung A relativ zur stationären Basis 22,

- eine Kraftmesseinrichtung 32 zum Erfassen der vom Fühlstempel 12 auf die Probe P ausgeübten Kraft,

- eine Steuereinrichtung ST, die dazu ausgebildet ist, die Antriebseinrichtung 30 abhängig von der mittels der Kraftmesseinrichtung 32 erfassten Kraft gemäß der vorbestimmten Kraftbelastung anzusteuern, und

- einen Wegaufnehmer 34 zur Messung der Bewegung des Fühlstempels 12 in Längsrichtung A relativ zur Basis 22.

Die Funktion der dargestellten Vorrichtung 10 lässt sich wie folgt beschreiben:

Ausgehend von der in Fig. 8 dargestellten Situation, bei welcher die Probe P bereits am Probenhalter 1 im Ofen 3 angeordnet ist und am dem Probenhalter 1 abgewandten Ende vom Fühlstempelende 14 kontaktiert wird, wird mittels eines in der Steuereinrichtung ST ablaufenden Steuerprogrammes ein "TMA-Messprogramm" durchgeführt, welches darin besteht, die Probe P gemäß des Temperaturprogrammes aufzuheizen, die Probe P hierbei mittels des Fühlstempels 12 gemäß der Kraftvorgabe (hier: zeitunabhängige Druckkraft) vorzubelasten und die sich im zeitlichen Verlauf daraus ergebende Längenänderung der Probe P in Längsrichtung A zu messen.

Die Steuereinrichtung ST ist hierfür über Steuerleitungen L1, L2, L3 und L4 mit entsprechenden Vorrichtungskomponenten verbunden: Die Leitung L1 dient zur Übertragung eines Temperierungssteuersignals an den Ofen 3 bzw. eine darin integrierte Temperierungseinrichtung (z. B. elektrische Heizung). Außerdem kann über die Leitung L1 eine Rückübertragung eines z. B. mittels eines Thermoelementes an der Probe P gemessenen Temperatursignals an die Steuereinrichtung ST erfolgen. Die Leitung L2 dient zur Übertragung eines Kraftmesssignals (Messwert der auf die Probe P ausgeübten Kraft) von der Kraftmesseinrichtung 32 zur Steuereinrichtung ST. Die Leitung L3 dient zur Übertragung eines Antriebssteuersignals zur Antriebseinrichtung 30. Die Leitung L4 dient zur Übertragung eines von dem Wegaufnehmer 34 ausgegebenen Wegmesssignals.

Insbesondere das z. B. über die Leitung L1 übertragene zeitabhängige Temperatursignal (repräsentativ für die Temperatur T) sowie das über die Leitung L4 übertragene zeitabhängige Längenänderungssignal (repräsentativ für z. B. für die absolute Längenänderung dL) wird in der Steuereinrichtung ST gespeichert, um für eine entsprechende Auswertung nach Abschluss der Messung zur Verfügung zu stehen.

Während der Messung steuert die Steuereinrichtung ST mittels einer Ansteuerung der Antriebseinrichtung 30 die mittels des Fühlstempels 12 auf die Probe P ausgeübte Kraft. Dies funktioniert wie folgt: Der Fühlstempel 12 ist wie bereits erwähnt mittels der Schraubklemme 28 an der Fühlstempelbasis 26 angebracht, so dass eine entsprechende Belastung bzw. Verstellung der Fühlstempelaufnahme 26 unmittelbar auf den Fühlstempel 12 und somit weiter auf die Probe P überträgt.

Die Fühlstempelaufnahme 26 wird im dargestellten Beispiel nicht unmittelbar von der Antriebseinrichtung 30 angetrieben. Vielmehr ist die Fühlstempelaufnahme 26 wie in Fig. 8 ersichtlich mit einem in der Figur oberen Ende eines elastischen Körpers 32-1 verbunden (hier: verschraubt), dessen in Fig. 8 unteres Ende mit einem Schlitten 24-1 der Führungseinrichtung 24 verbunden (hier: verschraubt) ist, welcher in Längsrichtung A verfahrbar an einer Führungsschiene 24-2 der Führungseinrichtung 24 geführt und mittels einer Schubstange 30-1 der Antriebseinrichtung 30 entsprechend verfahrbar ist. Das Ende der Schubstange 30-1 ist wie in der Figur ersichtlich am Schlitten 24-1 angeschraubt. Dementsprechend bewirkt eine Ansteuerung der Antriebseinrichtung 30, die im dargestellten Beispiel einen über die Leitung L3 angesteuerten Piezoschrittmotor enthält, zunächst zu einer Verschiebung der Schubstange 30-1 und somit des Schlittens 24-1 in Längsrichtung A. Über den elastischen Körper 32-1 wird diese Schlittenbewegung über die Fühlstempelaufnahme 26 und den Fühlstempel 12 in eine entsprechende Kraft bzw. Kraftänderung an der Probe P umgesetzt.

Demnach kann die aus dem Schlitten 24-1, der Fühlstempelaufnahme 26 und dem dazwischen angeordneten elastischen Körper 32-1 gebildete Einheit auch als antreibbare "Fühlstempelbasis" bezeichnet werden, welche an der stationären Basis 22 über die Führungseinrichtung 24 in Längsrichtung A relativ zur stationären Basis 22 bewegbar gelagert ist und an welcher der Fühlstempel 12 befestigt (oder befestigbar) ist. Angetrieben wird die Fühlstempelbasis 24-1, 26, 32-1 in Längsrichtung A relativ zur stationären Basis 22 wie erläutert durch die ansteuerbare Antriebseinrichtung 30.

Der elastische Körper 32-1 bildet zusammen mit einem (in der Figur nicht dargestellten) an der Leitung L2 angeschlossenen Dehnungsmessstreifen (z. B. an einer Außenfläche des elastischen Körpers 32-1 angebracht) die Kraftmesseinrichtung 32.

Insbesondere wenn der elastische Körper 32-1 aus einem metallischen Material gebildet ist, so kann anstelle eines Vollmaterials ein z. B. zumindest in einem zentralen Bereich ausgespartes Material eingesetzt werden, wie dies in Fig. 8 gestrichelt symbolisiert ist (hier: kreisrunde Aussparung in einem quaderförmigen Körper). Abweichend davon könnten z. B. auch mehrere jeweils kleinere solcher Aussparungen des elastischen Körpers vorgesehen sein.

Mittels der Kraftmesseinrichtung 32 wird während der Messung die tatsächlich auf die Probe P ausgeübte Kraft in Abhängigkeit von der Zeit gemessen und bevorzugt als Analog/Digital-gewandeltes Signal über die Leitung L2 der Steuereinrichtung ST zugeführt (oder in der Steuereinrichtung Analog/Digital-gewandelt).

In der Steuereinrichtung ST ist auch die z. B. durch eine entsprechende Benutzereingabe vorgegebene Kraftbelastung, d. h. die auf die Probe P auszuübende Kraft ("Soll-Wert") gespeichert. Mittels des in der Steuereinrichtung ST ablaufenden Steuerprogrammes wird der gemessene "Ist-Wert" der Kraft durch entsprechende Ansteuerung der Antriebseinrichtung 30 auf den durch die vorgegebene Kraftbelastung vorgegebenen "Soll-Wert" geregelt. Vorteilhaft führt eine in der Praxis unvermeidliche Reibung im Bereich der Führungseinrichtung 24 (zwischen Schlitten 24-1 und Führungsschiene 24-2) nicht zu einer entsprechenden Verfälschung der Kraftmessung.

Ebenso führt die simultan durchgeführte Messung der Längenänderung der Probe P im dargestellten Ausführungsbeispiel nicht zu einer Verfälschung der Kraftmessung. Die Messung der Längenänderung ist im dargestellten Beispiel wie folgt realisiert: An der Fühlstempelaufnahme 26, deren Bewegung in Längsrichtung A der zu messenden Längenänderung der Probe P entspricht, ist ein Maßstabsträger 34-1 mit davon ausgebildetem oder im dargestellten Beispiel daran angebrachtem (z. B. aufgeklebtem) Maßstab 34-2 angebracht, so dass die Längenänderung der Probe P sich in eine entsprechende Verschiebung des Maßstabes 34-2 überträgt, welche somit in einfacher Weise gemessen werden kann.

Zu diesem Zweck umfasst der Wegaufnehmer 34 des Weiteren einen stationär gehaltenen optischen Sensor 34-3 zur Messung der Relativverschiebung zwischen diesem Sensor 34-3 und dem Maßstab 34-2. Der Maßstab 34-2 ist hierfür z. B. mit äquidistant über seine Länge verteilten Strichmarkierungen versehen bzw. ausgebildet, welche beim Vorbeilaufen des Maßstabes 34-2 mittels des optischen Sensors 34-3 und einer daran angeschlossenen (oder darin integrierten) Linearencoderelektronik erfasst werden, um ein für die Längenänderung der Probe P repräsentatives Messsignal zu erhalten (Die Anzahl der erfassten Markierungen ist ein Maß für die Längenänderung). Dieses Messsignal wird über die Leitung L4 zur Steuereinrichtung ST zugeführt und dort für eine spätere Auswertung als zeitabhängiges Probenlängesignal digital gespeichert.

Die Linearencoderelektronik kann z. B. im Bereich des optischen Sensors 34-3 oder alternativ im Bereich der Steuereinrichtung ST angeordnet sein.

Das stationäre Halten des optischen Sensors 34-3 ist im dargestellten Beispiel durch einen Halter 34-4 bewerkstelligt, welcher einerseits mit dem Sensor 34-3 verbunden (hier: verschraubt) und andererseits mit der Basis 22 verbunden (hier: verschraubt) ist.

Mittels der dargestellten Vorrichtung 10 lässt sich somit vorteilhaft im Rahmen einer TMA-Analyse die Längenänderung der in Längsrichtung A vorbestimmt kraftbelasteten Probe P messen, wobei die aus der Längenänderung der Probe P in Längsrichtung A resultierende Bewegung des Fühlstempels 12 berührungslos gemessen wird, wobei ein Antreiben der Fühlstempelbasis 24-1, 26, 32-1, an welcher der Fühlstempel 12 befestigt ist, in Längsrichtung A relativ zur stationären Basis 22 erfolgt, und wobei dieses Antreiben mittels der Steuersoftware abhängig von der durch den Fühlstempel 12 auf die Probe P ausgeübten und mittels der Kraftmesseinrichtung 32 erfassten Kraft gemäß der vorbestimmten Kraftbelastung erfolgt (Kraftregelung).

Mittels der in der Steuereinrichtung ST ablaufenden Software werden die aufgezeichneten Daten einer Auswertung unterzogen, um temperaturabhängige Verläufe der reversiblen und der nichtreversiblen Komponenten der Längenänderung dL (bzw. dL/L) bzw. des thermischen Ausdehnungskoeffizienten $\alpha$ ermitteln. Durch entsprechende Ausgestaltung dieser Software lassen sich insbesondere die weiter oben für das Analyseverfahren beschriebenen Ausführungsformen und Weiterbildungen realisieren.

**Patentansprüche**

1. Verfahren zur thermomechanischen Analyse einer Probe (P) eines Materials, umfassend

   a) Anordnen der Probe (P) in einer thermomechanischen Analyseeinrichtung (10) und Temperieren der Probe (P) mittels der Analyseeinrichtung gemäß eines modulierten Temperaturprogrammes,
   b) Aufzeichnen von mittels der Analyseeinrichtung gewonnener Daten, die repräsentativ für eine Längenänderung (dL) der Probe (P) im Verlauf der Temperierung sind,
   c) Auswerten der Daten, um eine reversible Komponente ($dL_{rev}$) der Längenänderung (dL) und/oder eine reversible Komponente ($\alpha_{rev}$) des thermischen Ausdehnungskoeffizienten ($\alpha$) der Probe (P) zu ermitteln,
   d) Berechnen einer korrigierten reversiblen Komponente ($dL_{rev\text{-}corr}$; $\alpha_{rev\text{-}corr}$) der Längenänderung (dL) und/oder des thermischen Ausdehnungskoeffizienten ($\alpha$) mittels eines Korrekturparameters (k), der unter Verwendung eines aus den Daten ermittelten Verhältnisses eines eine totale Längenänderung $dL_{total}$) charakterisierenden Parameters ($\alpha_{total}$) und eines die reversible Komponente ($dL_{rev}$) der Längenänderung (dL) charakterisierenden Parameters ($\alpha_{rev}$) berechnet wird,

   **dadurch gekennzeichnet, dass** das Temperaturprogramm ein erstes Segment (S1) mit einer ersten Basisheizrate ($\beta$1) besitzt und der Korrekturparameter (k) anhand von Daten aus dem ersten Segment (S1) temperaturabhängig aus einer Schätzung einer temperaturabhängigen Funktion des genannten Verhältnisses in einem Bereich des ersten Segmentes (S1) berechnet wird, in welchem die Probe (P) keinem thermisch bedingten Umwandlungsprozess unterliegt,
   und dass das Temperaturprogramm ein zweites Segment (S2) mit einer zweiten Basisheizrate ($\beta$2) besitzt und für eine Berechnung der korrigierten reversiblen Komponente ($dL_{rev\text{-}corr}$; $\alpha_{rev\text{-}corr}$) der Längenänderung (dL) und/oder des thermischen Ausdehnungskoeffizienten ($\alpha$) im zweiten Segment (S2) der anhand der Daten aus dem ersten Segment (S1) berechnete Korrekturparameter (k) verwendet wird.

2. Verfahren nach Anspruch 1, wobei der Betrag der zweiten Basisheizrate ($\beta$2) gleich dem Betrag der ersten Basisheizrate ($\beta$1) ist.

3. Verfahren nach Anspruch 1, wobei der Betrag der zweiten Basisheizrate ($\beta$2) kleiner als der Betrag der ersten Basisheizrate ($\beta$1) ist.

4. Verfahren nach einem der vorangehenden Ansprüche, wobei der Betrag der ersten Basisheizrate ($\beta$1) größer als 0.5 K/min, insbesondere größer als 1 K/min ist.

5. Verfahren nach einem der vorangehenden Ansprüche, wobei der Betrag der zweiten Basisheizrate ($\beta$2) kleiner als 0,5 K/min, insbesondere kleiner als 0,2 K/min ist.

6. Verfahren nach einem der vorangehenden Ansprüche, wobei die Beträge der ersten Basisheizrate ($\beta$1) und der

zweiten Basisheizrate ($\beta2$) sich um mindestens einen Faktor 2, insbesondere mindestens um einen Faktor 5, voneinander unterscheiden.

7. Verfahren nach einem der vorangehenden Ansprüche, wobei die Probe (P) innerhalb des zweiten Segmentes (S2) einem thermisch bedingten Umwandlungsprozess unterliegt.

8. Verfahren nach einem der vorangehenden Ansprüche, wobei die Temperatur (T) der Probe (P) im Verlauf des zweiten Segmentes (S2) ansteigt und einen Wert von 500 °C überschreitet, insbesondere einen Wert von 1000 °C überschreitet.

9. Verfahren nach einem der vorangehenden Ansprüche, wobei beim Auswerten der Daten ferner eine nichtreversible Komponente ($dL_{nonrev}$) der Längenänderung (dL) ermittelt wird.

10. Verfahren nach einem der vorangehenden Ansprüche, wobei für den anhand von Daten aus dem ersten Segment (S1) berechneten Korrekturparameter (k) eine mathematische Schätzfunktion modelliert wird, welche den Korrekturparameter (k) in Abhängigkeit von der Temperatur (T) der Probe (P) angibt, und wobei anhand der mathematischen Schätzfunktion der für eine Berechnung der korrigierten reversiblen Komponente ($dL_{rev-corr}$) der Längenänderung (dL) im zweiten Segment (S2) zu verwendende Korrekturparameter (k) berechnet wird.

11. Verfahren nach einem der vorangehenden Ansprüche, wobei im Verlauf des Temperaturprogrammes das zweite Segment (S2) zeitlich betrachtet unmittelbar nach dem ersten Segment (S1) liegt, oder umgekehrt.

12. Vorrichtung (10) zur thermomechanischen Analyse einer Probe (P) eines Materials, umfassend

- eine Probenaufnahme (1) zum Aufnehmen der Probe (P),
- eine Temperiereinrichtung (ST, L1, 3) zum Temperieren der Probe (P) gemäß eines modulierten Temperaturprogrammes,
- eine Temperaturmesseinrichtung (L1) zur Messung einer Temperatur (T) der Probe (P) im Verlauf der Temperierung,
- eine Längenmesseinrichtung (20) zur Messung einer Längenänderung (dL) der Probe (P) im Verlauf der Temperierung,
- eine Datenaufzeichnungseinrichtung (ST) zum Aufzeichnen von Daten, die repräsentativ für die Längenänderung (dL) der Probe (P) im Verlauf der Temperierung sind, und von Daten, die repräsentativ für die Änderung der Temperatur (dT) der Probe (P) im Verlauf der Temperierung sind,
- eine Auswerteeinrichtung (ST), die dazu ausgebildet ist, eine reversible Komponente ($dL_{rev}$) der Längenänderung (dL) und/oder eine reversible Komponente ($\alpha_{rev}$) des thermischen Ausdehnungskoeffizienten ($\alpha$) der Probe (P) zu ermitteln und eine korrigierte reversible Komponente ($dL_{rev-corr}$; $\alpha_{rev-corr}$) der Längenänderung (dL) und/oder des thermischen Ausdehnungskoeffizienten ($\alpha$) mittels eines Korrekturparameters (k) zu berechnen, der unter Verwendung eines aus den Daten ermittelten Verhältnisses eines eine totale Längenänderung ($dL_{total}$) charakterisierenden Parameters ($\alpha_{total}$) und eines die reversible Komponente ($dL_{rev}$) der Längenänderung (dL) charakterisierenden Parameters ($\alpha_{rev}$) berechnet wird,

**dadurch gekennzeichnet, dass** die Temperiereinrichtung (ST, L1, 3) dazu ausgebildet ist, im Verlauf des Temperaturprogrammes ein erstes Segment (S1) mit einer ersten Basisheizrate ($\beta1$) und ein zweites Segment (S2) mit einer zweiten Basisheizrate ($\beta2$) vorzusehen,
und dass die Auswerteeinrichtung (ST) dazu ausgebildet ist, den Korrekturparameter (k) anhand von Daten aus dem ersten Segment (S1) temperaturabhängig aus einer Schätzung einer temperaturabhängigen Funktion des genannten Verhältnisses in einem Bereich des ersten Segmentes (S1) zu berechnen, in welchem die Probe (P) keinem thermisch bedingten Umwandlungsprozess unterliegt, und für eine Berechnung der korrigierten reversiblen Komponente ($dL_{rev-corr}$; $\alpha_{rev-corr}$) der Längenänderung (dL) und/oder des thermischen Ausdehnungskoeffizienten ($\alpha$) im zweiten Segment (S2) den anhand der Daten aus dem ersten Segment (S1) berechneten Korrekturparameter (k) zu verwenden.

**Claims**

1. A method for the thermomechanical analysis of a sample (P) of a material, comprising the

a) Arrangement of a sample (P) in a thermomechanical analysis device (10) and tempering of the sample (P) by means of the analysis device according to a modulated temperature program,

b) Recording of data obtained by means of the analysis device, which are representative for a change in length (dL) of the sample (P) in the course of tempering,

c) Evaluation of data to determine a reversible component ($dL_{rev}$) for the change in length (dL) and/or a reversible component ($\alpha_{rev}$) for the thermal expansion coefficient ($\alpha$) of the sample (P),

d) Calculation of a corrected, reversible component ($dL_{rev\text{-}corr}$; $\alpha_{rev\text{-}corr}$) for the change in length (dL) and/or the thermal expansion coefficient ($\alpha$) by means of a correction parameter (k), which is calculated using a correlation derived from the data between a parameter ($\alpha_{total}$) characterizing a total change in length ($dL_{total}$) and a parameter ($\alpha_{rev}$) characterizing the reversible component ($dL_{rev}$) for the change in length (dL),

**characterized in that** the temperature program has a first segment (S1) with a first base heating rate ($\beta$1) and the correction parameter (k) is calculated based on data from the first segment (S1) as a function of temperature from an estimation of a temperature-dependent function of the mentioned correlation in a range of the first segment (S1) in which the sample (P) is not subject to any thermally induced conversion process,

and that the temperature program has a second segment (S2) with a second base heating rate ($\beta$2) and the correction parameter (k) calculated based on data from the first segment (S1) is used to calculate the corrected, reversible component ($dL_{rev\text{-}corr}$; $\alpha_{rev\text{-}corr}$) for the change in length (dL) and/or the thermal expansion coefficient ($\alpha$) in the second segment (S2),

2. The method according to claim 1, wherein the amount of the second base heating rate ($\beta$2) is equal to the amount of the first base heating rate ($\beta$1).

3. The method according to claim 1, wherein the amount of the second base heating rate ($\beta$2) is less than the amount of the first base heating rate ($\beta$1).

4. The method according to one of the preceding claims, wherein the amount of the first base heating rate ($\beta$1) is greater than 0.5 K/min, in particular greater than 1 K/min.

5. The method according to one of the preceding claims, wherein the amount of the second base heating rate ($\beta$2) is less than 0.5 K/min, in particular less than 0.2 K/min.

6. The method according to one of the preceding claims, wherein the amounts of the first base heating rate ($\beta$1) and the second base heating rate ($\beta$2) differ from one another by at least a factor of 2, in particular by at least a factor 5.

7. The method according to one of the preceding claims, wherein the sample (P) inside of the second segment (S2) is subject to a thermally induced conversion process.

8. The method according to one of the preceding claims, wherein the temperature (T) of the sample (P) rises during the course of the second segment (S2), and exceeds a value of 500°C, in particular a value of 1000°C.

9. The method according to one of the preceding claims, wherein a nonreversible component ($dL_{nonrev}$) of the change in length (dL) is further determined while evaluating the data.

10. The method according to one of the preceding claims, wherein a mathematical estimator for the correction parameter (k) calculated based on data from the first segment (S1) is modeled, which indicates the correction parameter (k) as a function of the temperature (T) of the sample (P), and wherein the correction parameter (k) to be used for calculating the corrected, reversible component ($dL_{rev\text{-}corr}$) for the change in length (dL) in the second segment (S2) is calculated based on the mathematical estimator.

11. The method according to one of the preceding claims, wherein the second segment (S2) comes immediately after the first segment (S1) or vice versa from a chronological standpoint during the course of the temperature program.

12. A device (10) for the thermomechanical analysis of a sample (P) of a material, comprising:

- A sample receptacle (1) for holding the sample (P),
- A tempering device (ST, L1, 3) for tempering the sample (P) according to a modulated temperature program,
- A temperature measuring device (L1) for measuring a temperature (T) of the sample (P) in the course of tempering,
- A length measuring device (20) for measuring a length (dL) of the sample (P) in the course of tempering,
- A data recording device (ST) for recording data that are representative for the change in length. (dL) of the sample (P) during the course of tempering, and data that are representative for the change in temperature (dT) of the sample (P) in the course of tempering,
- An evaluating device (ST) designed to determine a reversible component (dL$_{rev}$) for the change in length (dL) and/or a reversible component ($\alpha_{rev}$) for the thermal expansion coefficient ($\alpha$) of the sample (P), and to calculate a corrected, reversible component (dL$_{rev-corr}$; $\alpha_{rev-corr}$) for the change in length (dL) and/or the thermal expansion coefficient ($\alpha$) by means of a correction parameter (k), which is calculated using a correlation derived from the data between a parameter ($\alpha_{total}$) characterizing a total change in length (dL$_{total}$) and a parameter ($\alpha_{rev}$) characterizing the reversible component (dL$_{rev}$) for the change in length (dL),

**characterized in that** the tempering device (ST, L1, 3) is designed to provide a first segment (S1) with a first base heating rate ($\beta$1) and a second segment (S2) with a second base heating rate ($\beta$ 2) in the course of the temperature program,
and that the evaluating device is designed to calculate the correction parameter (k) based on data from the first segment (S1) as a function of temperature from an estimation of a temperature-dependent function of the mentioned correlation in a range of the first segment (S1) in which the sample (P) is not subject to any thermally induced conversion process, and to use the correction parameter (k) calculated based on data from the first segment (S1) to calculate the corrected, reversible component (dL$_{rev-corr}$; $\alpha_{rev-corr}$) for the change in length (dL) and/or the thermal expansion coefficient ($\alpha$) in the second segment (S2).

**Revendications**

1. Procédé pour l'analyse thermomécanique d'un échantillon (P) d'une matière, comprenant :

   a) le platement de l'échantillon (P) dans un dispositif d'analyse thermomécanique (10) et la mise en température de l'échantillon (P) au moyen du dispositif d'analyse selon un programme de température modulée,
   b) l'enregistrement de données acquisses au moyen du dispositif d'analyse, qui sont représentatives pour une variation de longueur (dL) de l'échantillon(P) au cours de la mise en température,
   c) l'évaluation des données, pour déterminer un composant réversible (dL$_{rev}$) de la variation de longueur (dL) et/ou un composant réversible ($\alpha_{rev}$) du coefficient de dilatation thermique ($\alpha$) de l'échantillon(P),
   d) le calcul d'un composant réversible corrigé (dL$_{rev-corr}$ ; $\alpha_{rev-corr}$) de la variation de longueur (dL) et/ou du coefficient de dilatation thermique ($\alpha$) au moyen d'un paramètre de correction (k) que l'on calcule en utilisant un rapport d'un paramètre ($\alpha_{total}$) caractérisant une variation de longueur totale (dL$_{total}$) déterminée à partir des données et d'un paramètre ($\alpha_{rev}$) caractérisant le composant réversible (dL$_{rev}$) de la variation de longueur (dL),

   **caractérisé en ce que** le programme de température dispsoe d'un premier segment (S1) avec un premier taux de chauffage de base ($\beta$1) et le paramètre de correction (k) est calculé à l'aide de données provenant du premier segment (S1) en focntion de la température, à partir d'une estimation d'une fonction dépendant de la température du rapport cité dans une zone du premier segment (S1) dans laquelle l'échantillon (P) n'est soumis à aucun processus de transformation dû à la température,
   et **en ce que** le programme de température dispose d'un deuxième segment (S2) avec un deuxième taux de chauffage de base ($\beta$2) et pour un calcul du composant réversible corrigé (dL$_{rev-corr}$ ; $\alpha_{rev-corr}$) de la variation de longueur (dL) et/ou du coefficient de dilatation thermique ($\alpha$) dans le deuxième segment (S2), on utilise le paramètre de correstion (k) calculé à l'aide des données issues du premier segment (S1).

2. Procédé selon la revendication 1, le montant du deuxième taux de chauffage de base ($\beta$2) étant égal au montant du premier taux de chauffage de base ($\beta$1).

3. Procédé selon la revendication 1, le montant du deuxième taux de chauffage de base ($\beta$2) étant inférieur au montant du premier taux de chauffage de base ($\beta$1).

4. Procédé selon l'une quelconque des revendications précédentes, le montant du deuxième taux de chauffage de base ($\beta$1) étant supérieur à 0,5 K/mn, notamment supérieur à 1 K/mn.

5. Procédé selon l'une quelconque des revendications précédentes, le montant du deuxième taux de chauffage de

base ($\beta$2) étant inférieur à 0,5 K/mn, notamment inférieur à 0,2 K/mn.

6. Procédé selon l'une quelconque des revendications précédentes, les montants des premiers taux de chauffage de base ($\beta$1) et des deuxièmes taux de chauffage de base ($\beta$2) étant différentes les uns des autres d'au moins un coefficient 2, en particulier d'au moins un facteur 5.

7. Procédé selon l'une quelconque des revendications précédentes, l'échantillon (P) étant soumis à l'intérieur du deuxième segment (S2) à un processus de transformation dû à la température.

8. Procédé selon l'une quelconque des revendications précédentes, la température (T) de l'échantillon (P) augmentant au cours du deuxième segment (S2) et dépassant une valeur de 500 °C, dépassant notamment une valeur de 1000 °C.

9. Procédé selon l'une quelconque des revendications précédentes, lors de l'évaluation des données, par ailleurs une composant non réversible ($dL_{nonrev}$) de la variation de longueur (dL) étant déterminé.

10. Procédé selon l'une quelconque des revendications précédentes, pour le paramètre de correction (k) calculé à l'aide des données du premier segment (S1), un estimateur mathématique étant modellisé, lequel indique le paramètre de correction (k) en fonction de la température (T) de l'échantillon (P) et à l'aide de l'estimateur mathématique, le paramètre de correction (k) devant être utilité dans le deuxième segment (S2) pour un calcul du composant réversible corrigé ($dL_{rev-corr}$) de la variation de longueur (dL) étant calculé.

11. Procédé selon l'une quelconque des revendications précédentes, au cours du programme de température, considéré dans le temps, le deuxième segment (S2) se situant immédiatement après le premier segment (S1) ou inversement.

12. Dispositif (10) pour l'analyse thermomécanique d'un échantillon (P) d'une matière, comprenant :

- un logement d'échantillon (1) destiné à recevoir l'échantillon (P),
- un dispositif de mise en température (ST, L1, 3) pour la mise en température de l'échantillon (P) selon un programme de température modulé,
- un dispositif de mesure de la température (L1) pour mesurer une température (T) de l'échantillon (P) au cours de la mise en température,
- un dispositif de mesure de la longueur (20) pour mesurer une variation de longueur (dL) de l'échantillon (P) au cours de la mise en température,
- un système d'enregistrement de données pour enregistrer des données qui sont représentatives pour la variation de longueur (dL) de l'échantillon (P) au cours de la mise en température, et de données qui sont représentatives pour la variation de la température (dT) de l'échantillon (P) au cours de la mise en température,
- un dispositif d'évaluation (ST), qui est conçu pour déterminer un composant réversible ($dL_{rev}$) de la variation de longueur (dL) et/ou un composant réversible ($\alpha_{rev}$) du coefficient de dilatation thermique ($\alpha$) de l'échantillon (P) et pour calculer un composant réversible corrigé ($dL_{rev\ corr}$; $\alpha_{rev-corr}$) de la variation de longueur (dL) et/ou du coefficient de dilatation thermique ($\alpha$) au moyen d'un paramètre de correction (k) qui est calculé sous utilisation d'un rapport déterminé à partir des données d'un paramètre ($\alpha_{total}$) caractérisant une variation de longueur totale ($dL_{total}$) et d'un paramètre ($\alpha_{rev}$) caractérisant le composant réversible ($dL_{rev}$) de la variation de longueur (dL),

**caractérisé en ce que** le dispositif de mise en température (ST, L1, 3) est conçu pour prévoir, au cours du programme de température un premier segment (S1) avec un premier taux de chauffage de base ($\beta$1) et un deuxième segment (S2) avec un deuxième taux de chauffage de base ($\beta$2),
et **en ce que** le dispositif d'évaluation est conçu pour calculer le paramètre de correction (k) à l'aide de données du premier segment (S1) en fonction de la température à partir d'une évaluation d'une fonction dépendant de la température du rapport cité dans une zone du premier segment (S1) dans laquelle l'échantillon (P) n'est soumlis à aucun processus de transformation dû à la température et pour utiliser le paramètre de correction (k) calculé à l'aide des données du premier segment (S1) pour un calcul du composant réversible corrigé ($dL_{rev\ corr}$; $\alpha_{rev-corr}$) de la variation de longueur (dL) et/ou du coefficient de dilatation thermique ($\alpha$) dans le deuxième segment (S2).

**Fig. 1**

**Fig. 2**

**Fig. 3**

**Fig. 4**

EP 3 112 854 B1

**Fig. 5**

Fig. 6

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6007240 A